# EUROPÄISCHE PATENTSCHRIFT

(11) **EP 1 037 937 B1**
(45) Veröffentlichungstag und Bekanntmachung des Hinweises auf die Patenterteilung: **14.05.2003**
(21) Anmeldenummer: 98965788.7
(22) Anmeldetag: 08.12.1998
(51) Int. Cl.: C08G 77/50, C08G 77/20, C08G 77/12, C09D 183/14, C09D 183/04

(54) **VERFAHREN ZUR HERSTELLUNG VON LINEAREN ORGANOPOLYSILOXANEN MIT ALPHA-OMEGA-ENDSTÄNDIGEN SI-GEBUNDENEN ALKENYLGRUPPEN- ODER ALPHA, OMEGA-ENDSTÄNDIGEN SI-GEBUNDENEN WASSERSTOFFATOMEN**
METHOD FOR PRODUCING LINEAR ORGANOPOLYSILEXANES WITH $g(a),$g(v) TERMINAL Si-LINKED ALKENYL GROUPS OR $g(a),$g(v) TERMINAL SI-LINKED HYDROGEN ATOMS
PROCEDE DE PRODUCTION D'ORGANOPOLYSILOXANES LINEAIRES COMPORTANT DES GROUPES ALCENYLE $g(a),$g(v)-TERMINAUX LIES PAR Si OU BIEN DES ATOMES D'HYDROGENE $g(a),$g(v)-TERMINAUX LIES PAR Si

(30) Priorität: 09.12.1997 DE 19754673; 04.12.1998 DE 19856075
(43) Veröffentlichungstag der Anmeldung: 27.09.2000
(73) Patentinhaber: Wacker-Chemie GmbH, 81737 München (DE)
(72) Erfinder: HERZIG, Christian, D-83329 Waging (DE)
(74) Vertreter: Fritz, Helmut, Dr.
(86) Internationale Anmeldenummer: EP9807966
(87) Internationale Veröffentlichungsnummer: WO99029762

(56) Entgegenhaltungen:
- EP-A- 0 469 927
- EP-A- 0 549 214
- EP-A- 0 679 676
- EP-A- 0 786 463

## Beschreibung

Die Erfindung betrifft ein Verfahren zur Herstellung von linearen Organopolysiloxanen mit α,ω-endständigen Si-gebundenen Alkenygruppen- oder α,ω-endständigen Si-gebundenen Wasserstoffatomen.

In US 5,442,083 (Dow Corning Toray Silicone; ausgegeben am 15. August 1995) ist ein Verfahren zur Herstellung von linearen Organopolysiloxanen mit α,ω-endständigen Si-gebundenen Vinylgruppen- oder α,ω-endständigen Si-gebundenen Wasserstoffatomen beschrieben, indem ein α,ω-Dihydrogendimethylpolysiloxan mit einem aliphatisch ungesättigten Kohlenwasserstoff mit zwei C=C-Doppelbindungen und mindestens drei Kohlenstoffatomen oder einem Alkin mit mindestens zwei Kohlenstoffatomen in Gegenwart von Hydrosilylierungskatalysatoren umgesetzt wird.

Aus EP-A 414 938 (Nippon Unicar Company Limited; offengelegt am 06. März 1991) ist eine vernetzbare Zusammensetzung bekannt, die ein thermoplastisches Harz und ein lineares Organopolysiloxan enthält, wobei das lineare Organopolysiloxan durch Umsetzung eines linearen, endständige Si-gebundene Wasserstoffatome aufweisenden Organopolysiloxans mit einem linearen Dien mit mehr als fünf Kohlenstoffatomen erhalten wird.

In US-A 5,087,720 (Shin-Etsu Chemical Co.; ausgegeben am 11. Februar 1992) werden lineare Organopolysiloxane mit endständigen Si-gebundenen Vinylgruppen beschrieben, die in der Kette sich wiederholende Einheiten der Formel -(SiR₂-CH₂CH₂-SiR₂O)ₙ- aufweisen. Die Herstellung erfolgt über eine Ringöffnungspolymerisation eines 5-gliedrigen cyclischen Silethylensiloxans der allgemeinen Formel 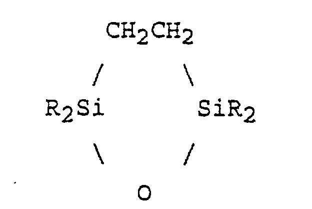 in Gegenwart eines Divinyldisiloxans.

Aus US-A 5,386,049 (Shin-Etsu Chemical Co.; ausgegeben am 31. Januar 1995) sind lineare Organopolysiloxane mit endständigen Si-gebundenen Hydroxylgruppen oder Vinyldiorganosilylgruppen bekannt, die in der Kette sich wiederholende Einheiten der Formel -[SiMe₂-(CH₂)ₚ-SiMe₂O]ₙ- (Me = Methylrest, p = 10-16) aufweisen.

In US-A 5,504,175 (Dow Corning Toray Silicone Co.; ausgegeben am 02. April 1996) sind lineare Organosiliciumpolymere mit endständigen Si-gebundenen Wasserstoffatomen oder endständigen Si-gebundenen Alkenylgruppen beschrieben, die durch Umsetzung eines asymmetrischen linearen α-Hydrogen-ω-alkenyldiorganopolysiloxans mit einem symmetrischen linearen α,ω-Dihydrogendiorganopolysiloxan oder α,ω-Dialkenyldiorganopolysiloxan in Gegenwart eines Hydrosilylierungskatalysators erhalten werden. Dieses Verfahren benötigt ein asymmetrisches Diorganopolysiloxan, dessen präzise Herstellung aufwendig und teuer und damit technisch wenig attraktiv ist.

Es bestand die Aufgabe, ein Verfahren zur Herstellung von linearen Organopolysiloxanen mit α,ω-endständigen Si-gebundenen Alkenylgruppen- oder α,ω-endständigen Si-gebundenen Wasserstoffatomen bereitzustellen, das einfach ist, bei dem die Bildung von niedermolekularen flüchtigen bzw. cyclischen Nebenprodukten vermieden wird und bei dem die eingesetzten Edukte einfach gereinigt werden können.

Die Aufgabe wird durch die Erfindung gelöst.

Gegenstand der Erfindung ist ein Verfahren zur Herstellung von linearen Organopolysiloxanen mit α,ω-endständigen Si-gebundenen ω-Alkenylgruppen oder α,ω-endständigen Si-gebundenen Wasserstoffatomen der allgemeinen Formel

XR₂SiO(R₂SiO)ₓ-G_{y}-R₂Si-[R³-R₂SiO(R₂SiO)ₓ-G_{y}-R₂Si]_{z}X (I)

durch Umsetzung von Si-gebundene ω-Alkenylgruppen aufweisenden Organopolysiloxanen der allgemeinen Formel

R¹R₂SiO(R₂SiO)ₘR₂SiR¹ (II)

mit Si-gebundenen, Wasserstoffatomen aufweisenden Organopolysiloxanen der allgemeinen Formel

R²R₂SiO(R₂SiO)ₒ-Bₚ-R₂SiR² (III)

in Gegenwart von die Anlagerung von Si-gebundenem Wasserstoff an aliphatische Mehrfachbindung fördernden Katalysatoren,
wobei R einen gegebenenfalls substituierten Kohlenwasserstoffrest mit 1 bis 18 Kohlenstoffatom(en) je Rest bedeutet,
X jeweils gleiche Reste ausgewählt aus den Resten R¹ und R² bedeutet,
wobei R¹ einen ω-Alkenylrest mit 2 bis 18 C-Atomen und
R² ein Wasserstoffatom bedeutet,
R³ ein bifunktioneller α,ω-Alkandiylrest mit 2 bis 18 C-Atomen ist,
G ein Rest B ist,
und B ein Rest der Formel

-R₂Si-R⁴-R₂SiO(R₂SiO)ₒ-

ist, wobei
R⁴ einen zweiwertigen Kohlenwasserstoffrest mit 2 bis 14 Kohlenstoffatomen je Rest bedeutet, der durch 1 bis 4 separate Sauerstoffatome unterbrochen sein kann
m eine ganze Zahl im Wert von 10 bis 1000 ist,
o eine ganze Zahl im Wert von 10 bis 1000 ist,
p 0 oder eine ganze Zahl im Wert von 1 bis 20 ist,
x m oder o ist,
y p ist und
z eine ganze Zahl im Wert von mindestens 2.

Die nach dem erfindungsgemäßen Verfahren hergestellten Organopolysiloxane besitzen vorzugsweise eine Viskosität von 20 bis 200.000.000 mm²/s bei 25°C, bevorzugt 2000 bis 100.000.000 mm²/s bei 25°C und besonders bevorzugt 100.000 bis 20.000.000 mm²/s bei 25°C.
Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Cycloalkylreste, wie Cyclopentyl-, Cyclohexyl-, Cycloheptylreste und Methylcyclohexylreste; Arylreste, wie der Phenylrest; Alkarylreste, wie o-, m-, p-Tolylreste, Xylylreste und Ethylphenylreste und Aralkylreste, wie der Benzylrest, der α- und der β-Phenylethylrest. Bevorzugt ist der Methylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m-, und p-Chlorphenylrest.

Beispiele für Reste R¹ sind der Vinyl-, Allyl, 3-Butenyl-, 5-Hexenyl-, 7-Octenyl, 9-Decenyl- und der 13-Tetradecenylrest. Bevorzugt sind der Vinyl- und der 5-Hexenylrest, besonders bevorzugt ist der Vinylrest.

Beispiele für Reste Y sind solche der Formel -CH₂CH₂-, -CH(CH₃)-, -(CH₂)₄-, -(CH₂)₅-, -(CH₂)₆-, -(CH₂)₈-, -(CH₂)₁₀-, -(CH₂)₁₂-, -(CH₂)₃O(CH₂)₃-, 1,3-(CH₂CH₂)₂(C₆H₄), 1,4-(CH₂CH₂)₂(C₆H₄), 1,3-(CH₂CHCH₃)₂(C₆H₄), wobei der Rest der Formel -CH₂CH₂- bevorzugt ist.

Vorzugsweise ist m eine ganze Zahl im Wert 100 bis 500.

Vorzugsweise ist o eine ganze Zahl im Wert 100 bis 500.

Vorzugsweise ist p 0 oder eine ganze Zahl im Wert von 1 bis 5, bevorzugt ist p 0.

Verfahren zur Herstellung der Organopolysiloxane der Formel (II) und (III) sind dem Fachmann bekannt.

Bei dem erfindungsgemäßen Verfahren kann das eingesetzte Verhältnis von Si-gebundenen ω-Alkenylgruppen in Organopolysiloxanen der Formel (II) zu Si-gebundenen Wasserstoffatomen in Organopolysiloxanen der Formel (III) je nach gewünschtem Endprodukt in weiten Grenzen variieren. Bei dem erfindungsgemäßen Verfahren beträgt das Verhältnis von Si-gebundenen ω-Alkenylgruppen in Organopolysiloxanen der Formel (II) zu Si-gebundenen Wässerstoffatomen in Organopolysiloxanen der Formel (III) vorzugsweise 100 : 1 bis 1 : 100, bevorzugt 5 : bis 1 : 5, besonders bevorzugt 1,5 : 1 bis 1 : 1,5, ganz besonders bevorzugt 1,3 : 1 bis 1 : 1,3, wobei im Bereich 1,1 : 1 bis 1 : 1,1 besonders hochmolekulare Produkte erzielt werden können. Bei einem stöchiometrischen Überschuß an Si-gebundenen ω-Alkenylgruppen werden Polymere mit Kohlenwasserstoffbrücken -C₂H₄- entlang der Kette und je einer Si-gebundenen ω-Alkenylgruppe an beiden Kettenenden erhalten. Umgekehrt werden bei einem Überschuß an Si-gebundenen Wasserstoffatomen Polymere mit Kohlenwasserstoffbrücken -C₂H₄- entlang der Kette und je einem Si-gebundenen Wasserstoffatom an beiden Kettenenden erhalten.

Als die Anlagerung von Si-gebundenem Wasserstoff an aliphatische Mehrfachbindung fördernde Katalysatoren können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆*6H₂O, Na₂PtCl₄*4H₂O, Platin-Olefin-Komplexe, Platin-Alkohol-Komplexe, Platin-Vinylsiloxankomplexe, wie Platin-1,3-Divinyl-1,1,3,3-tetra-methyldisiloxankomplexe mit oder ohne Gehalt an nachweisbarem anorganisch gebundenem Halogen, Trimethylendipyridinplatindichlorid, Dicyclopentadienplatindichlorid, Cyclooctadien-Platindichlorid, Norbornadien-Platindichlorid sowie Umsetzungsprodukte von Platintetrachlorid mit Olefin.

Der Katalysator wird bei dem erfindungsgemäßen Verfahren vorzugsweise in Mengen von 1 bis 50 Gew.-ppm (Gewichtsteilen je Million Gewichtsteilen), bevorzugt in Mengen von 5 bis 30 Gew.-ppm, jeweils berechnet als elementares Platin und bezogen auf das Gesamtgewicht der Organopolysiloxane der Formeln (II) und (III) eingesetzt.

Bei dem erfindungsgemäßen Verfahren werden die entsprechenden Organopolysiloxane der Formel II und III bzw. eine Mischung der entsprechenden Organopolysiloxane mit bekannten, kommerziell erwerbbaren Emulgatoren und den üblichen Techniken, z.B. mit Rotor-Stator- oder Dissolver- Rührvorrichtungen, sowie mit Hochdruckhomogenisatoren, in wäßrige, über längere Zeit stabile Emulsionen überführt.

Der Katalysator kann bei dem erfindungsgemäßen Verfahren, vor oder während der Herstellung der Emulsion, entweder dem Organopolysiloxan der Formel II oder der Mischung der Organopolysiloxane der Formel II und III zugesetzt werden.

Die Bildung der erfindungsgemäß hergestellten Organopolysiloxane kann während der Herstellung der Emulsion, oder in der fertigen Emulsion erfolgen.

Beispiele für in dem erfindungsgemäßen Verfahren verwendeten Emulgatoren sind:
Sorbitanester von Fettsäuren mit 10 bis 22 Kohlenstoffatomen; Polyoxyethylensorbitanester von Fettsäuren mit 10 bis 20 Kohlenstoffatomen und bis zu 35% Ethylenoxidgehalt; Polyoxyethylensorbitolestern von Fettsäuren mit 10 bis 22 Kohlenstoffatomen; Polyoxyethylenderivate von Phenolen mit 6 bis 20 Kohlenstoffatomen am Aromaten und bis zu 95% Ethylenoxidgehalt; Fettamino- und Amidobetaine mit 10 bis 22 Kohlenstoffatomen; Polyoxyethylenkondensate von Fettsäuren oder Fettalkoholen mit 10 bis 22 Kohlenstoffatomen mit bis zu 95% Ethylenoxidgehalt; Polyvinylalkohole mit 5 bis 50% Vilylacetateinheiten, mit einem Polymerisationsgrad von 500 bis 3000;
ionische Tenside, wie Alkarylsulfonate mit 6 bis 20 Kohlenstoffatomen in der Alkylgruppe; Fettsäureseifen mit 10 bis 22 Kohlenstoffatomen in der Alkylgruppe; Fettsäureseifen mit 10 bis 22 Kohlenstoffatomen; Fettsulfate mit 10 bis 22 Kohlenstoffatomen; Alkylsulfonate mit 10 bis 22 Kohlenstoffatomen; Alkalimetallsalze mit Dialkylsulfosuccinaten; Fettaminoxide mit 10 bis 22 Kohlenstoffatomen; Fettimidazoline mit 6 bis 20 Kohlenstoffatomen; Fettamidosulfobetaine mit 10 bis 22 Kohlenstoffatomen;
quarternäre Tenside, wie Fettammoniumverbindungen; mit 10 bis 22 Kohlenstoffatomen; Fettmorpholinoxide mit 10 bis 22 Kohlenstoffatomen; Alkalimetallsalze von carboxylierten ethoxylierten Alkoholen mit 10 bis 22 Kohlenstoffatomen und bis zu 95% Ethylenoxid; Ethylenoxidkondensate von Fettsäurmonoestern des Glycerins mit 10 bis 22 Kohlenstoffatomen und bis 95% Ethylenoxid; Mono- oder Diethanolamide von Fettsäuren mit 10 bis 22 Kohlenstoffatomen; alkoxylierte Silicontenside mit Ethylenoxid- und oder Propylenoxideinheiten; Phosphatester.

Wie auf dem Gebiet der Tenside wohl bekannt, können die Gegenionen im Falle von anionischen Tensiden Alkalimetalle, Ammoniak oder substituierte Amine, wie Triethylamin oder Triethanolamin, sein. Im Falle von kationischen Tensiden ist das Gegenion ein Halogenid, Sulfat oder Methylsulfat. Chloride sind die zumeist industriell verfügbaren Verbindungen.

In dem erfindungsgemäßen Verfahren kann ein Emulgator oder ein Gemisch aus zweier oder mehrerer Emulgatoren Verwendung finden.

Das erfindungsgemäße Verfahren wird vorzugsweise beim Druck der umgebenden Atmosphäre, also etwa bei 1020 hPa (abs.), durchgeführt, es kann aber auch bei höheren oder niedrigeren Drücken durchgeführt werden. Es wird vorzugsweise in einem Temperaturbereich von 0°C bis 160°C, bevorzugt von 20°C bis 120°C, durchgeführt. Im Falle einer Emulsion wird es Temperaturbereich von 0 °C bis 50 °C durchgeführt.

Bei dem erfindungsgemäßen Verfahren können inerte, organische Lösungsmittel mitverwendet werden, obwohl die Mitverwendung von inerten, organischen Lösungsmitteln nicht bevorzugt ist.

Beispiele für inerte, organische Lösungsmittel sind Toluol, Xylol, Octanisomere, Butylacetat, 1,2-Dimethoxyethan, Tetrahydrofuran und Cyclohexan.

Des weiteren können zur Regelung des Viskositätsprofils oder aus handhabungstechnischen Gründen inerte niedermolekulare Siloxane wie Hexamethyldisiloxan, Octamethyltrisiloxan oder etwas höhere Homologe sowie cyclische Dialkylsiloxane mit 3 bis 14 Siloxyeinheiten zugesetzt werden.

Falls aus verarbeitungstechnischen Gründen erwünscht, kann dem Gemisch aus Organopolysiloxanen der Formel (II) und (III) ein Reaktionsverzögerer zugesetzt werden.

Als die Anlagerung von Si-gebundenem Wasserstoff an aliphatische Mehrfachbindung bei Raumtemperatur verzögernde Mittel, sogenannte Inhibitoren, können auch bei den erfindungsgemäßen Zusammensetzungen alle Inhibitoren gegebenenfalls verwendet werden, die auch bisher für den gleichen Zweck verwendet werden konnten. Beispiele für Inhibitoren sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung gemäß US-A 3,445,420, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, 3,7-Dimethyl-oct-l-in-6-en-3-ol Inhibitoren gemäß US-A 2,476,166, wie eine Mischung aus Diallylmaleinat und Vinylacetat, und Inhibitoren gemäß US 4,504,645, wie Maleinsäuremonoester.

Vorzugsweise wird der Inhibitor in Mengen von 0,001 bis 10 Gew.-%, bezogen auf das Gesamtgewicht der Organopolysiloxane, eingesetzt, wobei die Menge von 0,005 bis 0,01 Gew.-% bevorzugt ist.

Das erfindungsgemäße Verfahren kann absatzweise, halbkontinuierlich oder vollkontinuierlich durchgeführt werden.

Das erfindungsgemäße Verfahren kann auch bevorzugt in der Anwesenheit von Wasser in der Ölphase stattfinden. Dabei kann es sich um eine kontinuierliche Ölphase mit Wassertröpfchen oder auch um eine kontinuierliche Wasserphase mit Öltröpfchen handeln. Es kann sich auch bevorzugt um eine Emulsion handeln. Dies hat den Vorteil, daß sich Emulsionen mit hochmolekularen Organopolysiloxanen in situ in der Ölphase herstellen lassen. Es ist also möglich nach dem erfindungsgemäßen Verfahren Emulsionen mit hochmolekularen Organopolysiloxanen herzustellen. Dies war früher überhaupt nicht möglich.

Die Wassermenge der nach dem erfindungsgemäßen Verfahren hergestellten Emulsionen beträgt vorzugsweise 30 Gew.% bis 90 Gew.%, bevorzugt 40 Gew.% bis 70 Gew.% bezogen auf das Gesamtgewicht der Zusammensetzung.

Das erfindungsgemäße Verfahren hat den Vorteil, daß keine niedermolekularen flüchtigen oder cyclischen Nebenprodukte ohne Endfunktionen anfallen und daß die eingesetzten Ausgangsmaterialien, die Organopolysiloxane der Formeln (II) und (III), gegebenenfalls einfach zu reinigen sind. Die Entfernung von Nebenprodukten z. B. durch Destillation (Ausheizen im Vakuum) entfällt daher, was insbesondere bei höhermolekularen Organopolysiloxanen der Formel (I), die eine höhere Viskosität aufweisen, von Vorteil ist, da die Entfernung der Nebenprodukte aufgrund der höheren Viskosität der Endprodukte aufwendig und unvollständig ist.

Die nach dem erfindungsgemäßen Verfahren erhaltenen Organopolysiloxane der Formel (I) werden für Hydrosilylierungsreaktionen, als Polymerrohstoffe zum Aufbau von Netzwerken und zur Herstellung von Telechelen mit gleichen oder verschiedenen Endgruppen verwendet.

Die erfindungsgemäßen Emulsionen werden verwendet zur Oberflächenbehandlung von flexiblen Materialien wie Leder oder Kunstleder, z.B. aus Polyurethan sowie starren Flächen, wie Fußböden aus Stein, Kunststein, Kunststoffen, Fliesen aus Keramik, Steingut oder Steinzeug.

Die Applizierung in dünner Schicht bewirkt einen kontrollierten Gleiteffekt.

### Beispiel 1:

870 g eines α,ω-Divinyldimethylpolysiloxans mit einer Jodzahl von 41,6 werden bei 25°C mit 67 g 1,1,3,3-Tetramethyldisiloxan gemischt und mit 10 mg Platin in Form des 1,3-Divinyltetramethyldisiloxankomplexes (sogenannter Karstedt-Katalysator) versetzt. Die Temperatur steigt zunächst langsam, dann immer schneller bis auf ca. 56°C, wonach das Gemisch bei 80°C ca. eine Stunde ausreagieren gelassen wird, bis kein Si-gebundener Wasserstoff mehr nachweisbar ist. Ohne weitere Aufarbeitung enthält das Produkt 0,8 Gew.-% flüchtige Bestandteile (2g/1h/180°C) und weist eine Viskosität von 96 mm²/s bei 25°C auf. Das 1H-NMR-Spektrum des Produktes, ein lineares Dimethylpolysiloxan mit -C₂H₄-Brücken und endständigen Vinyldimethylsiloxaneinheiten, zeigt ein Verhältnis von SiC₂H₄Si/SiCH=CH₂ gleich 2,4. Die Jodzahl des Produktes beträgt 11,4, was einer durchschnittlichen Kettenlänge von ca. 60 Siloxaneinheiten entspricht.

### Beispiel 2:

Es werden 642 g eines α,ω-Divinyldimethylpolysiloxans mit einer Jodzahl von 41,6 mit 285 g eines α,ω-Dihydrogendimethylpolysiloxans mit 0,35 Gew.-% Si-gebundenem Wasserstoff gemischt, und danach wird dem homogenen Siloxangemisch Karstedt-Katalysator in einer solchen Menge zugegeben, daß der gesamte Ansatz 5 ppm Platin enthält. Nach zweistündiger Erwärmung auf 120°C wird ein Linearpolymer mit -C₂H₄-Brücken und endständigen Vinyldimethylsiloxaneinheiten, in dem kein Si-gebundener Wasserstoff nachweisbar ist, und das nur 0,8 Gew.-% flüchtige Bestandteile aufweist, erhalten. Das Linearpolymer weist eine Viskosität von 97.000 mPa.s bei 25°C und eine Jodzahl von 0,7 auf.

### Vergleichsversuch 1:

Es werden 50 g eines α,ω-Divinyldimethylpolysiloxans mit einer Jodzahl von 30,5 mit 120 g eines α,ω-Dihydroxydimethylpolysiloxans mit einer Viskosität von 5.800 mm²/s bei 25°C und 5 g schwefelsaurer Tonerde gemischt und auf ca. 80°C erwärmt. Die Viskosität fällt laufend, bis nach 5 Stunden eine Viskosität von 99 mm²/s bei 25°C (nach Filtration) erreicht ist. Das so erhaltene lineare Polymer mit α,ω-endständigen Si-gebundenen Vinylgruppen enthält 9,7 Gew.-% flüchtige Bestandteile und damit mehr als das Zehnfache des linearen Polymers hergestellt nach Beispiel 1.

### Vergleichsversuch 2:

Beispiel 2 wird wiederholt, indem statt der 642 g des mittelviskosen α,ω-Divinyldimethylpolysiloxans 98 g 1,3-Divinyltetramethyldisiloxan eingesetzt werden. Nach zwei Stunden Erwärmen bei 120°C ist nur eine mäßige Viskositätserhöhung eingetreten. Weitere zwei Stunden Erwärmen bei 140°C ergeben eine Polymermischung mit einer Viskosität von 4.200 mm²/s bei 25°C, in der noch Si-gebundener Wasserstoff nachweisbar ist. Mit dem Disiloxan (also Summe m+n = 0) werden vergleichsweise unvollständige Umsätze erreicht.

### Beispiel 3

175 g einer Mischung aus einem α,ω-Dihydrogenpolydimethylsiloxan mit 0,058 % Si-gebundenem Wasserstoff und einem α,ω-Divinylpolydimethylsiloxan mit einem Vinylgehalt von 0,92% im Massenverhältnis von 1 : 1,892 mit einer Viskosität von 116 mm²/s werden mit 5 bis 30% der Gesamtwassermenge (300 g vollentsalztem Wasser (VE Wasser)) und 25 g Emulgator Arlypon IT 10/80 (Fa. Grünau) (Arlypon IT 10/80 entspricht der mittleren Formel C₁₃ H₂₇O (C₂ H₄O)₁₀ H) in einem Rotor-Stator-Emulgiergerät (Turrax; Fa. Janke & Kunkel) 2 bis 3 Min. lang gerührt. Anschließend werden 1000 ppm einer 1%igen (bezogen auf Pt) Lösung von Karstedt-Katalysator in Vinylsiloxan 1 bis 2 Min. lang eingearbeitet und diese Mischung anschließend mit dem Restwasser verdünnt.

Man erhält eine Emulsion mit einer durchschnittlichen Teilchengröße von ca. 280 nm. Durch Eindampfen der Emulsion und Reextraktion des Polysiloxans mit n-Heptan wird eine hochviskose Masse mit 145.000 mPa.s und einem Vinylgehalt von 0,06 Gew.-% gewonnen.

### Beispiel 4

Die Mischung (175 g) aus Beispiel 3 wird an einem Labordissolver (Fa. Molteni) mit 1000 ppm des gleichen Platinkatalysators versetzt, 1 Min. homogenisiert und anschließend schrittweise unter Rühren mit 25 g Emulgator IT 10/80 und 300g VE-Wasser versetzt.

### Beispiel 5

50 g Emulgator IT 10/80 werden mit 4 bis 30% der VE-Wassermenge (600 g) und 350 g der Mischung aus Beispiel 1 an einem Labordissolver 1 Min. lang gerührt. Anschließend werden 1000 ppm des gleichen Pt-Katalysators für 2 Min. eingerührt und schrittweise mit dem restlichen VE-Wasser verdünnt.

### Beispiel 6

Eine am Turrax (Fa. Janke & Kunkel) hergestellte Voremulsion aus 700 g Polymermischung, katalysiert mit 1000 ppm des gleichen Katalysators, 100 g Arlypon IT 10/80 und 600 g VE-Wasser werden an einem Hochdruckhomogenisator (LAB 60 der Fa. APV) bei einem Druck von 700 bar homogenisiert.

### Beispiel 7

Wie in Beispiel 3, werden 175 g einer Mischung aus 95,2 Teilen eines α,ω-Dihydrogen-polydimethylsiloxans mit 0,210 % Si-gebundenem Wasserstoff aus 976,0 Teilen eines α,ω-Divinylpolydimethylsiloxans mit 0,69 % Vinylgehalt emulgiert. Auf gleiche Weise wird das gebildete Siloxanpolymer extraktiv gewonnen. Es hat einen Vinylgehalt von 0,126 % bei einer Viskosität von 18.600 mPa.s.

### Beispiel 8

Beispiel 3 wird wiederholt, indem eine Polymermischung mit 8.500 mPa.s eingesetzt wird, die aus 29,1 Gew.-% eines α,ω-Dihydrogenpolydimethylsiloxans mit 0,0109 % Si-gebundenem Wasserstoff und 70,9 Gew.-% eines α,ω-Divinylpolydimethylsiloxans mit der Jodzahl 1,083 besteht. Das reextrahierte Polymer hat eine Viskosität größer als 3,5.10⁷ mPa.s. Die Emulsion selbst zeigt auch nach mehreren Wochen bei 50°C kein wesentliches Aufrahmen.

### Beispiel 9

Eine Ölphase wird mit 34,5 g des in Beispiel 3 verwendeten Hydrogensiloxans und 359,7 g eines α,ω-Di-ω-hexenylpolydimethylsiloxans inhibiert, mit 100 ppm 1-Ethinylcyclohexanol hergestellt und wie in Beispiel 1 emulgiert. Das nach einem Tag reextrahierte Polysiloxan hat eine Jodzahl von 0,65 und eine Viskosität von 77.000 mPa.s.

### Beispiel 10

Beispiel 3 wird sinngemäß wiederholt, indem die gleichen Komponenten verwendet werden, jedoch in umgekehrtem stöchiometrischen Verhältnis, so daß ein Überschuß von Si-gebundenem Wasserstoff resultiert. Das Hydrogensiloxan wird daher in einem Massenverhältnis zum Vinylsiloxan von 1,532 eingesetzt, was einem Verhältnis von HSi-Gruppen zu C=C-Gruppen von 1,11 entspricht. Aus der erhaltenen Emulsion läßt sich ein Polymer mit 169 000 mPa.s reextrahieren, welches einen Gehalt an Si-gebundenem Wasserstoff von 0,0022 % aufweist.

### Beispiel 11

Die in Beispiel 8 verwendete Polymermischung aus Dihydrogenund Divinylpolydimethyl-siloxan wird mit 100 ppm Polyadditionsregler 2-Methyl-3-butin-2-ol, 2000 ppm des 1%igen Platinkatalysators sowie 14% des Emulgators Arlypon IT 10/80 versetzt. Es werden zusätzlich zu 200 Teilen dieser Vormischung 60 Teile Wasser addiert und einem Dispax (Fa. Janke & Kunkel) zugeführt.

Die entstandene Paste wird kontinuierlich mit der gleichen Menge Wasser (Restwasser) bei einem Gesamtdurchsatz von 400 ml/min. einem zweiten Dispax zugeführt und so in die Siloxanpolymeremulsion übergeführt. Das reextrahierte Polymer hat eine Viskosität von ca. 4.10⁷ mPa.s.

### Vergleichsbeispiel 3

175 g eines Dimethylpolysiloxans der Viskosität 8.10⁶ mPa.s werden mit 25 g Arlypon IT 10/80 und 30 % der Gesamtwassermenge von 300 g im Turrax-Emulgiergerät 3 Minuten lang gerührt und anschließend mit dem Restwasser verdünnt. Man erhält keine brauchbare Emulsion, da sich nach kurzem Stehen grobteilige Festpartikel absondern.

## Patentansprüche

1. Verfahren zur Herstellung von linearen Organopolysiloxanen mit α,ω-endständigen Si-gebundenen ω-Alkenylgruppen- oder α,ω-endständigen Si-gebundenen Wasserstoffatomen der allgemeinen Formel
XR₂SiO(R₂SiO)ₓ-G_{y}-R₂Si-[R³-R₂SiO(R₂SiO)ₓ-G_{y}-R₂Si]_{z}X (I)
durch Umsetzung von Si-gebundene ω-Alkenylgruppen aufweisenden Organopolysiloxanen der allgemeinen Formel
R¹R₂SiO(R₂SiO)ₘR₂SiR¹ (II)
mit Si-gebundenen Wasserstoffatomen aufweisenden Organopolysiloxanen der allgemeinen Formel
R²R₂SiO(R₂SiO)ₒ-Bₚ-R₂SiR² (III)
in Gegenwart von die Anlagerung von Si-gebundenem Wasserstoff an aliphatische Mehrfachbindung fördernde Katalysatoren,
wobei R einen gegebenenfalls substituierten Kohlenwasserstoffrest mit 1 bis 18 Kohlenstoffatom(en) je Rest bedeutet,
X jeweils gleiche Reste ausgewählt aus den Resten R¹ und R² bedeutet,
wobei R¹ einen ω-Alkenylrest mit 2 bis 18 C-Atomen und
R² ein Wasserstoffatom bedeutet,
R³ ein bifunktioneller α,ω-Alkandiylrest mit 2 bis 18 C-Atomen ist,
G ein Rest B ist,
und B ein Rest der Formel
-R₂Si-R⁴-R₂SiO(R₂SiO)ₒ-
ist, wobei
R⁴ einen zweiwertigen Kohlenwasserstoffrest mit 2 bis 14 Kohlenstoffatomen je Rest bedeutet, der durch 1 bis 4 voneinander separate Sauerstoffatome unterbrochen sein kann,
m eine ganze Zahl im Wert von 10 bis 1000 ist,
o eine ganze Zahl im Wert von 10 bis 1000 ist,
p 0 oder eine ganze Zahl im Wert von 1 bis 20 ist,
x m oder o ist,
y p ist und
z eine ganze Zahl im Wert von mindestens 2 ist.

2. Verfahren nach Anspruch 1 **dadurch gekennzeichnet, daß** X R¹ (Vinylrest) ist.

3. Verfahren nach Anspruch 1 **dadurch gekennzeichnet, daß** X R² (Wasserstoffatom) ist.

4. Verfahren nach Anspruch 1, 2 oder 3 **dadurch gekennzeichnet, daß** das Verhältnis von Si-gebundenen ω-Alkenylgruppen in Organopolysiloxanen der Formel (II) zu Si-gebundenen Wasserstoffatomen in Organopolysiloxanen der Formel (III)
100 : 1 bis 1 : 100 beträgt.

5. Verfahren nach einem der Ansprüche 1 bis 4, **dadurch gekennzeichnet, daß** p 0 ist.

6. Verfahren zur Behandlung von Oberflächen, **dadurch gekennzeichnet, daß** Organopolysiloxane, die nach einem oder mehreren der Ansprüche 1 bis 5 hergestellt werden, verwendet werden.

## Claims

1. Process for the preparation of linear organopolysiloxanes having α,ω-terminal Si-bonded ω-alkenyl groups or α,ω,-terminal Si-bonded hydrogen atoms of the general formula
XR₂SiO(R₂SiO)ₓ-Gy-R₂Si-[R³-R₂SiO(R₂SiO)ₓ-G_{y}-R₂Si]_{z}X (I)
by reacting Si-bonded organopolysiloxanes having ω-alkenyl groups and of the general formula
R¹R₂SiO(R₂SiO)ₘ-R₂SiR¹ (II)
with Si-bonded organopolysiloxanes having hydrogen atoms and of the general formula
R²R₂SiO(R₂SiO)ₒ-Bₚ-R₂SiR² (III)
in the presence of catalysts promoting the addition of Si-bonded hydrogen at an aliphatic multiple bond,
where R denotes an optionally substituted hydrocarbon radical having 1 to 18 carbon atom(s) per radical,
X denotes in each case identical radicals selected from the radicals R¹ and R²,
where R¹ denotes an ω-alkenyl radical having 2 to 18 C atoms,
R² denotes a hydrogen atom,
R³ is a bifunctional α,ω-alkanediyl radical having 2 to 18 C atoms,
G is a radical B,
and B is a radical of the formula
-R₂Si-R⁴-R₂SiO(R₂SiO)ₒ-
where
R⁴ denotes a divalent hydrocarbon radical having 2 to 14 carbon atoms per radical, which may be interrupted by 1 to 4 separate oxygen atoms,
m is an integer having a value of 10 to 1000,
o is an integer having a value of 10 to 1000,
p is 0 or an integer having a value of 1 to 20,
x is m or o,
y is p and
z is an integer having a value of at least 2.

2. Process according to Claim 1, **characterized in that** X is R¹ (vinyl radical).

3. Process according to Claim 1, **characterized in that** X is R² (hydrogen atom).

4. Process according to Claim 1, 2 or 3, **characterized in that** the ratio of Si-bonded ω-alkenyl groups in organopolysiloxanes of the formula (II) to Si-bonded hydrogen atoms in organopolysiloxanes of the formula (III) is
100:1 to 1:100.

5. Process according to any of Claims 1 to 4, **characterized in that** p is 0.

6. Method for treating surfaces, **characterized in that** organopolysiloxanes which are prepared according to one or more of Claims 1 to 5 are used.

## Revendications

1. Procédé de préparation d'organopolysiloxanes linéaires renfermant des groupes ω-alcényle α,ω-terminaux, liés au silicium, ou des atomes d'hydrogène α,ω-terminaux, liés au silicium de formule générale
XR₂SiO(R₂SiO)ₓ-G_{y}-R₂Si-[R³-R₂SiO(R₂SiO)ₓ-G_{y}-R₂Si]_{z}X (I)
par réaction d'organopolysiloxanes renfermant des groupes ω-alcényle liés au silicium, de formule générale
R¹R₂SiO(R₂SiO)ₘR₂SiR¹ (II)
avec des organopolysiloxanes renfermant des atomes d'hydrogène liés au silicium, de formule générale
R²R₂SiO(R₂SiO)ₒ-Bₚ-R₂SiR² (III)
en présence de catalyseurs favorisant l'addition d'hydrogène lié au silicium sur une liaison multiple aliphatique,
où R représente un radical hydrocarboné éventuellement substitué renfermant de 1 à 18 atome(s) de carbone par radical,
X représente, dans chaque cas, des radicaux identiques choisis parmi les radicaux R¹ et R²,
où R¹ représente un radical ω-alcényle renfermant de 2 à 18 atomes de carbone, et
R² représente un atome d'hydrogène,
R³ représente un radical α,ω-alcanediyle bifonctionnel renfermant de 2 à 18 atomes de carbone,
G représente un radical B,
B représente un radical de formule
-R₂Si-R⁴-R₂SiO(R₂SiO)ₒ-
dans laquelle
R⁴ représente un radical hydrocarboné bivalent renfermant de 2 à 14 atomes de carbone par radical, qui peut être interrompu par 1 à 4 atomes d'oxygène séparés les uns des autres,
m représente un entier valant de 10 à 1000,
o représente un entier valant de 10 à 1000,
p vaut 0 ou représente un entier valant de 1 à 20,
x est m ou o,
y est p, et
z représente un entier valant au moins 2.

2. Procédé selon la revendication 1, **caractérisé en ce que** X est R¹ (un radical vinyle).

3. Procédé selon la revendication 1, **caractérisé en ce que** X est R² (un atome d'hydrogène).

4. Procédé selon la revendication 1, 2 ou 3, **caractérisé en ce que** le rapport entre les groupes ω-alcényle liés au silicium dans des organopolysiloxanes de formule (II) et des atomes d'hydrogène liés au silicium dans des organopolysiloxanes de formule (III) est de 100:1 à 1:100.

5. Procédé selon l'une quelconque des revendications 1 à 4, **caractérisé en ce que** p vaut 0.

6. Procédé de traitement de surfaces, **caractérisé en ce que** l'on utilise des organopolysiloxanes qui sont préparés selon l'une ou plusieurs des revendications 1 à 5.
